# EUROPÄISCHE PATENTSCHRIFT

(11) **EP 0 562 157 B1**
(45) Veröffentlichungstag und Bekanntmachung des Hinweises auf die Patenterteilung: **17.05.1995**
(21) Anmeldenummer: 92117665.7
(22) Anmeldetag: 16.10.1992
(51) Int. Cl.: F16B 21/16

(54) **Steckverbindung**
Snap-in connection
Fixation enfichable

(30) Priorität: 25.03.1992 DE 4209608
(43) Veröffentlichungstag der Anmeldung: 29.09.1993
(73) Patentinhaber: Firma Carl Freudenberg, 69469 Weinheim (DE)
(72) Erfinder: Brümmer, Michael, W-6947 Laudenbach (DE); Gesenhues, Bernhard, W-6943 Birkenau (DE); Daume, Volker, W-6932 Hirschhorn (DE)

(56) Entgegenhaltungen:
- EP-A- 0 083 451
- EP-A- 0 444 304
- DE-A- 1 450 970
- DE-A- 1 917 334

## Beschreibung

Die Erfindung betrifft eine Steckverbindung, umfassend ein erstes Maschinenelement mit einer Ausnehmung, ein in die Ausnehmung einfügbares zweites Maschinenelement und einen elastischen, U-förmigen Bügel, wobei dem ersten und dem zweiten Maschinenelement benachbarte Positionierungsvorrichtungen zugeordnet sind, wobei der Bügel eine quer zur Fügerichtung verlaufende Bewegungsrichtung aufweist und mit den Positionierungsvorrichtungen in Eingriff bringbar ist und wobei der Bügel im ersten Maschinenelement einrastbar ist.

Eine solche Verbindung ist aus der DE-OS 3 607 811 bekannt. Danach durchragt ein U-förmiger Bügel, bestehend aus Draht, mit seinen Schenkeln ein erstes und zweites Maschinenelement und fixiert dabei die axiale Lage der Elemente zueinander. Dabei ist allerdings zu beachten, daß eine Automatisierung der Montage nur unter erheblichem Aufwand vorgenommen werden kann, da sämtliche zur Verbindung benötigten Teile nacheinander miteinander verbunden werden müssen. Außerdem weist die vorbekannte Verbindung eine nur wenig befriedigende Wirtschaftlichkeit insbesondere hinsichtlich der Material- und Fertigungskosten auf.

Aus der EP-A-83451 ist eine Steckverbindung bekannt, bei welcher vordere Endspitzen des Bügels hinter Rastabsätze des ersten Maschinenelements eingreifen. Der klammerförmige Bügel weist Anschläge auf, die bei zurückgezogenem Bügel mit dessen Endspitzen zusammenwirken.

Der Erfindung liegt die Aufgabe zugrunde, eine solche Verbindung derart weiterzuentwickeln, daß sich eine sehr einfache Montage ergibt, daß die Montage gegebenenfalls besonders einfach automatisiert werden kann und daß sich die Verbindung durch geringe Material- und Fertigungskosten auszeichnet.

Diese Aufgabe wird erfindungsgemäß bei einer Steckverbindung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Steckverbindung ist es vorgesehen, daß das erste Maschinenelement im Bereich seiner Positionierungsvorrichtungen in Bewegungsrichtung des Bügels zumindest zwei hintereinanderliegende Rasten aufweist, daß die Rasten in Bewegungsrichtung vor und hinter der Ausnehmung für das zweite Maschinenelement angeordnet sind, daß der Bügel in Bewegungsrichtung zumindest an seinem vorderen Ende mit einer Einrastvorrichtung versehen ist, die mit den Rasten des ersten Maschinenelementes in Eingriff bringbar ist und daß der Bügel in zurückgezogenem Zustand mit der ersten Raste in Eingriff bringbar ist und außerhalb der Ausnehmung angeordnet ist. Hierbei ist von Vorteil, daß die Steckverbindung sehr einfach montierbar ist. Zunächst wird der Bügel mit der in Bewegungsrichtung des Bügels ersten Raste des ersten Maschinenelementes in Eingriff gebracht. Dieser Arbeitsgang kann beispielsweise auch vor der eigentlichen Montage des zweiten Maschinenelementes in das erste Maschinenelement erfolgen. Anschließend wird das zweite Maschinenelement in die Ausnehmung des ersten Maschinenelementes eingesetzt und durch Einschieben des Bügels in Richtung der zweiten Raste in diesem fixiert. Der Bügel wird so lange in Bewegungsrichtung durch die Positionierungsvorrichtungen des ersten und des zweiten Maschinenelementes geführt, bis dieser in der zweiten Raste des ersten Maschinenelementes einrastet. Die in Bewegungsrichtung zweite Raste kann beispielsweise durch eine Kante des ersten Maschinenelementes am Ende der Positionierungsvorrichtung gebildet sein. Anschließend sind die beiden Maschinenelemente in radialer und axialer Richtung zueinander fixiert. Darüber hinaus ist von Vorteil, daß zumindest der Bügel und das erste Maschinenelement aus dem gleichen Material hergestellt sein können. Daraus ergeben sich besonders geringe Materialkosten für die Steckverbindung und Recycling-Vorteile.

Eine besonders einfache Montage der Steckverbindung ergibt sich, wenn die Positionierungsvorrichtungen nutförmig ausgebildet sind.

Gemäß einer vorteilhaften Ausgestaltung ist vorgesehen, daß die in Bewegungsrichtung vorderen Enden des Bügels hakenförmig gestaltet sind und daß die Rasten als Ausnehmungen ausgebildet sind. Nach einer anderen Ausgestaltung kann der Bügel Ausnehmungen aufweisen, die mit hakenförmigen Rasten des ersten Maschinenelementes in Eingriff bringbar sind. In Abhängigkeit von den jeweiligen Gegebenheiten des Anwendungsfalles ist eine Steckverbindung herstellbar, die besonders wirtschaftlich herstellbar ist.

Der Bügel kann in Bewegungsrichtung an seinen vorderen Enden zumindest jeweils eine Demontageausnehmung aufweisen. Diese kann vorteilhafterweise durch eine Bohrung gebildet sein, in die ein zangenförmiges Werkzeug zur Demontage der Steckverbindung eingreifen kann. Neben einer einfachen Herstellbarkeit und problemlosen Montage der Steckverbindung ergibt sich auch eine einfache Demontage.

Zum besseren Ausgleich von Herstellungstoleranzen im Bereich der Positionierungsvorrichtungen der beiden Maschinenelemente kann der Bügel in Bewegungsrichtung wellenförmig ausgebildet sein. Eine wellenförmige Ausbildung des Bügels gewährleistet ferner eine gute axiale Festlegung der beiden Maschinenelemente im montierten Zustand, ohne daß die beiden Maschinenelemente und/oder der Bügel mit besonders geringen Toleranzen hergestellten werden müßten.

Außer der wellenförmigen Ausbildung des Bügels in Bewegungsrichtung kann vorgesehen sein, daß der Bügel zwischen seinen gegenüberliegenden Oberflächen in Bewegungsrichtung einen kontinuierlich zunehmenden Abstand aufweist, wodurch die beiden Maschinenelemente nach der Montage unter Vorspannung sowohl in axialer als auch in radialer Richtung ineinander festgelegt sind.

Im Hinblick auf geringe Material- und Fertigungskosten kann der Bügel aus elastisch verformbarem Material, beispielsweise aus einem polymeren Werkstoff, bestehen. Der Bügel kann gleichzeitig mit dem ersten Maschinenelement hergestellt werden, das auch aus polymerem Werkstoff bestehen kann, was im Hinblick auf eine kostengünstige Fertigung besonders vorteilhaft ist.

Der Gegenstand der vorliegenden Erfindung wird nachfolgend anhand der Zeichnungen weiter erläutert. Diese zeigen ein Ausführungsbeispiel mit zu berücksichtigenden Einzelkomponenten in schematischer Darstellung.
Figur 1 zeigt das erste Maschinenelement mit dem vormontierten Bügel in einer Ansicht von oben,
Figur 2 das in Figur 1 dargestellte erste Maschinenelement mit dem eingesetzten zweiten Maschinenelement, wobei die beiden Maschinenelemente durch den Bügel fixiert sind,
Figur 3 zwei Schnitte durch das erste Maschinenelement mit eingeschobenem Bügel gemäß Figur 2 und
Figur 4 ein Ausführungsbeispiel für durch den Bügel verbundene Maschinenelemente in geschnittener Darstellung.

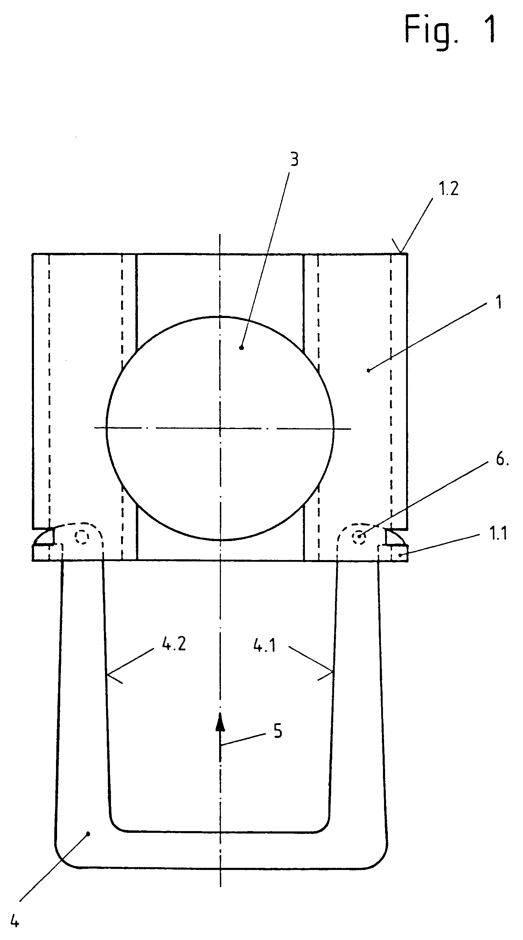

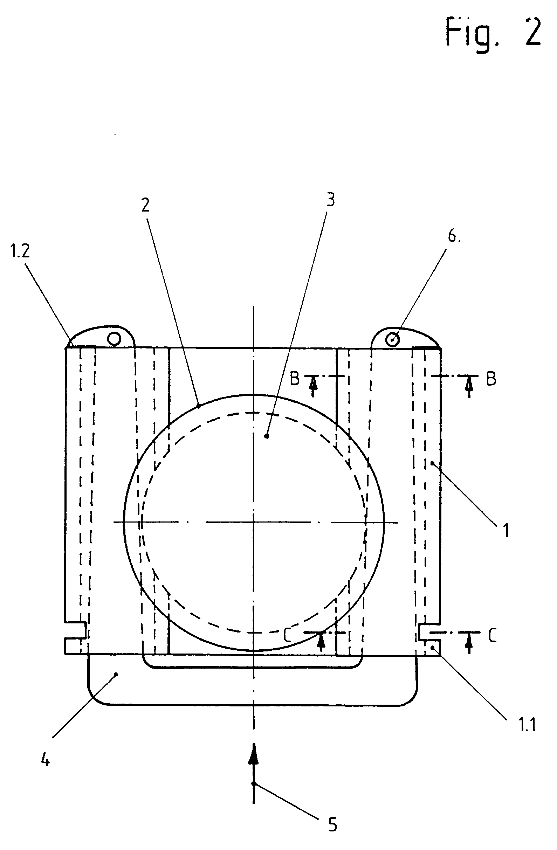

In Figur 1 ist das erste Maschinenelement 1 gezeigt, das im Bereich seiner Positionierungsvorrichtungen, die nutförmig gestaltet sind, zwei in Bewegungsrichtung 5 des Bügels 4 hintereinanderliegende Rasten 1.1, 1.2 aufweist. Die in Bewegungsrichtung erste Raste 1.1 und durch eine Ausnehmung gebildet während die zweite Raste 1.2 durch das Gehäuse des ersten Maschinenelementes 1 gebildet ist. Dieses Ausführungsbeispiel ist besonders einfach und wirtschaftlich herstellbar. Der Bügel 4, dessen Enden hakenförmig gestaltet sind, ist mit den ersten Rastern 1.1 des ersten Maschinenelementes 1 in Eingriff. In diesem vormontierten Zustand überdeckt der Bügel 4 die Ausnehmung 3 des ersten Maschinenelementes 1 nicht, so daß, wie in Figur 2 dargestellt, das zweite Maschinenelement 2 problemlos in die Ausnehmung 3 eingefügt werden kann. Die Enden des Bügels 4 sowie die in Bewegungsrichtung 5 hintereinanderliegenden Rasten 1.1., 1.2 können zur Erfüllung der gestellten Aufgabe auch andersartig ausgebildet sein.

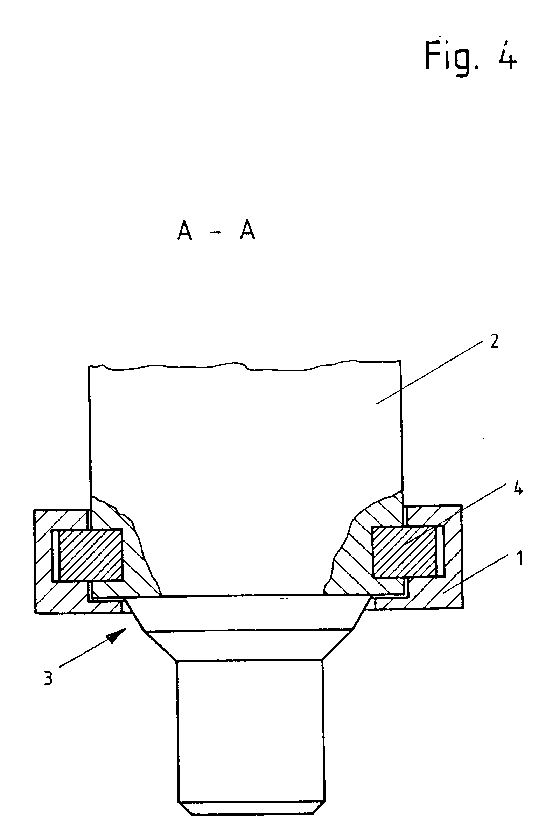

In den Figuren 2 und 4 ist der Endmontagezustand dargestellt, wobei das zweite Maschinenelement 2 in die Ausnehmung des ersten Maschinenelementes 1 eingesetzt ist. Sowohl das erste 1 als auch das zweite Maschinenelement 2 weisen nutenförmige Positionierungsvorrichtungen auf, die, wie auch der Bügel 4, spiegelbildlich ausgebildet sind. Der Bügel 4, der aus federndem, polymerem Werkstoff besteht, ist in der zweiten Raste 1.2 des ersten Maschinenelementes 1 eingerastet. Die beiden Maschinenelemente 1, 2 sind sowohl in axialer als auch in radialer Lage zueinander fixiert. Die Demontageausnehmungen 6 am vorderen Ende des Bügels 4 sind so angeordnet, daß diese mit einem Demontagewerkzeug gut zu erreichen sind. Zur Demontage des zweiten Maschinenelementes ist lediglich der Bügel an der zweiten Raste 1.2 auszuhaken und entgegen der Bewegungsrichtung 5 nach hinten zu ziehen. Durch die gegenüberliegenden Oberflächen 4.1, 4.2 des Bügels 4, die in Bewegungsrichtung 5 einen kontinuierlich zunehmenden Abstand aufweisen, lockert sich zunächst die Verbindung des ersten und zweiten Maschinenelementes 1, 2, wobei der Bügel, wenn er bis an die erste Raste 1.1 anliegend zurückgezogen ist, das zweite Maschinenelement 2 ohne Vorspannung völlig freigibt. Zur vollständigen Demontage des Bügels 4 aus dem ersten Maschinenelement 1 kann dieser im zurückgezogenen Zustand elastisch nach innen verformt und anschließend abgezogen werden. Nach einer anderen Ausgestaltung des Bügels kann dieser im hinteren Bereich zusätzliche Demontageausnehmungen aufweisen, so daß der Bügel 4 beispielsweise mit dem gleichen Werkzeug, das auch mit den vorderen Demontageausnehmungen in Eingriff bringbar ist, entfernt werden kann. Die hakenförmigen Enden des Bügels 4 sind derart gestaltet, daß eine zuverlässige Festlegung des Bügels 4 am ersten am Maschinenelement 1 gewährleistet ist. Die Auflageflächen der Haken können mit den Auflageflächen des ersten Maschinenelementes zur besseren Verspannung des Bügels einen Winkel von 2 bis 15° einschließen.

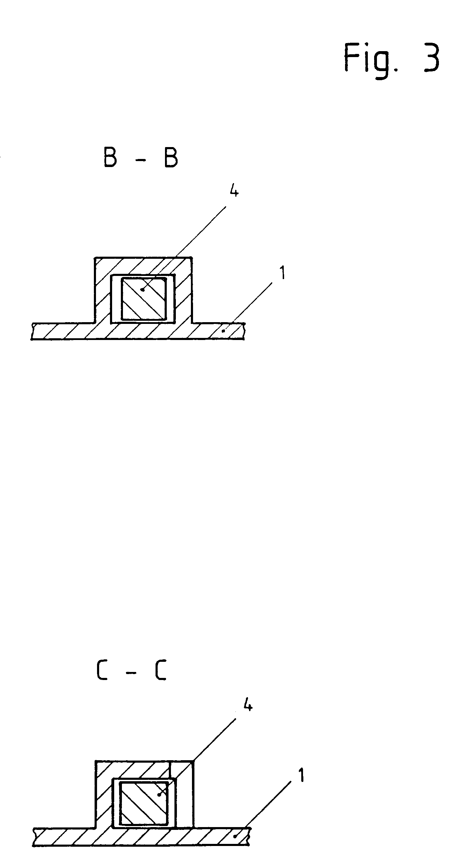

In Figur 3 sind zwei Schnitte entlang der Linie B-B und C-C gemäß Figur 2 dargestellt. Im Schnitt C-C ist der Bereich der ersten Raste 1.1 dargestellt, die vor der Montage des zweiten Maschinenelementes mit den hakenförmigen Enden des Bügels 4 in Eingriff ist.

Der wesentliche Vorteil der Steckverbindung besteht darin, daß das erste Maschinenelement 1 zwei hintereinanderliegende Rasten 1.1, 1.2 aufweist, wobei, wenn der Bügel 4 mit der ersten Raste 1.1 in Eingriff ist, das zweite Maschinenelement 2 montiert werden kann, ohne daß der Bügel total entfernt werden müßte oder eine undefinierte Lage einnimmt. Dies erleichtert die Handhabung im allgemeinen und insbesondere bei automatischer Montage. Der Bügel 4 kann beispielsweise im selben Werkzeug, in dem auch das erste Maschinenelement 1 gefertigt wird, mitgefertigt werden, so daß neben geringen Materialkosten auch nur geringe Fertigungskosten entstehen.

## Patentansprüche

1. Steckverbindung, umfassend ein erstes Maschinenelement (1) mit einer Ausnehmung (3) ein in die Ausnehmung (3) einfügbares zweites Maschinenelement (2) und einen elastischen, U-förmigen Bügel (4), wobei dem ersten (1) und dem zweiten Maschinenelement (2) benachbarte Positionierungsvorrichtungen zugeordnet sind, wobei der Bügel (4) eine quer zur Fügerichtung verlaufende Bewegungsrichtung (5) aufweist und mit den Positionierungsvorrichtungen in Eingriff bringbar ist und wobei der Bügel (4) im ersten Maschinenelement (1) einrastbar ist, dadurch gekennzeichnet, daß das erste Maschinenelement (1) im Bereich seiner Positionierungsvorrichtungen in Bewegungsrichtung (5) des Bügels (4) zumindest zwei hintereinanderliegende Rasten (1.1, 1.2) aufweist, daß die Rasten (1.1, 1.2) in Bewegungsrichtung (5) vor und hinter der Ausnehmung (3) für das zweite Maschinenelement (2) angeordnet sind, daR der Bügel (4) in Bewegungsrichtung (5) zumindest an seinem vorderen Ende mit einer Einrastvorrichtung versehen ist, die mit den Rasten (1.1, 1.2) des ersten Maschinenelementes (1) in Eingriff bringbar ist und daR der Bügel (4) im zurückgezogenen Zustand mit der ersten Raste (1.1) in Eingriff bringbar ist und außerhalb der Ausnehmung (3) angeordnet ist.

2. Steckverbindung nach Anspruch 1, dadurch gekennzeichnet, daß zumindest eine der Positionierungsvorrichtungen nutförmig ausgebildet ist.

3. Steckverbindung nach Ansprüchen 1 bis 2, dadurch gekennzeichnet, daß die in Bewegungsrichtung (5) vorderen Enden des Bügels (4) hakenförmig gestaltet sind und daR die Rasten (1.1, 1.2) als Ausnehmungen ausgebildet sind.

4. Steckverbindung nach Ansprüchen 1 bis 2, dadurch gekennzeichnet, daR der Bügel (4) Ausnehmungen aufweist, und daß die Ausnehmungen mit hakenförmigen Rasten des ersten Maschinenelementes (1) in Eingriff bringbar sind.

5. Steckverbindung nach Ansprüchen 1 bis 4, dadurch gekennzeichnet, daß der Bügel (4) in Bewegungsrichtung (5) an seinen vorderen Enden zumindest jeweils eine Demontageausnehmung (6) aufweist.

6. Steckverbindung nach Ansprüchen 1 bis 5, dadurch gekennzeichnet, daß der Bügel (4) in Bewegungsrichtung (5) wellenförmig ausgebildet ist.

7. Steckverbindung nach Ansprüchen 1 bis 6, dadurch gekennzeichnet, daß der Bügel (4) zwischen seinen gegenüberliegenden Oberflächen (4.1, 4.2) in Bewegungsrichtung (5) einen kontinuierlich zunehmenden Abstand aufweist.

8. Steckverbindung nach Ansprüchen 1 bis 7, dadurch gekennzeichnet, daß der Bügel (4) aus polymerem Werkstoff besteht.

## Claims

1. A plug-in connection comprising a first machine element (1) with an aperture (3), a second machine element (2) insertable into the aperture (3), and an elastic U-shaped shackle (4), the first (1) and the second machine element (2) being assigned adjacent positioning devices, the shackle (4) having a direction (5) of movement transverse to the direction of insertion and being capable of being brought into engagement with the positioning devices, and the shackle (4) being capable of being snapped into the first machine element (1), characterized in that the first machine element (1) has at least two catches (1.1, 1.2) arranged in series in the region of its positioning devices in the direction (5) of motion of the shackle (4), in that the catches (1.1, 1.2) are arranged ahead of and behind the aperture (3) for the second machine element (2) in the direction (5) of motion, in that in the direction (5) of motion the shackle (4) is provided at at least its forward end with a snap-in device which can be brought into engagement with the catches (1.1, 1.2) of the first machine element (1), and in that in the retracted condition the shackle (4) can be brought into engagement with the first catch (1.1) and is arranged outside the aperture (3).

2. A plug-in connection according to claim 1, characterized in that at least one of the positioning devices is in the form of a groove.

3. A plug-in connection according to either of claims 1 and 2, characterized in that the forward ends of the shackle (4) in the direction (5) of motion are of hook-shaped configuration and in that the catches (1.1, 1.2) are designed as apertures.

4. A plug-in connection according to either of claims 1 and 2, characterized in that the shackle (4) has apertures and in that the apertures can be brought into engagement with hook-shaped catches of the first machine element (1).

5. A plug-in connection according to any of claims 1 to 4, characterized in that in the direction (5) of motion the shackle (4) has at least one disassembly aperture (6) at each of its forward ends.

6. A plug-in connection according to any of claims 1 to 5, characterized in that the shackle (4) is of wave-shaped design in the direction (5) of motion.

7. A plug-in connection according to any of claims 1 to 6, characterized in that the shackle (4) has a continuously increasing distance between its opposite surfaces (4.1, 4.2) in the direction (5) of motion.

8. A plug-in connection according to any of claims 1 to 7, characterized in that the shackle (4) is composed of polymeric material.

## Revendications

1. Fixation enfichable, comportant un premier élément de machine (1) pourvu d'un évidement (3), un second élément de machine (2) pouvant être engagé dans l'évidement (3) et un étrier élastique (4) en forme de U, le premier (1) et le second élément de machine (2) étant associés à des dispositifs de positionnements adjacents, l'étrier (4) comportant une direction de mouvement (5) orientée perpendiculairement à la direction d'engagement et pouvant être amené en prise avec les dispositifs de positionnement et également l'étrier (4) pouvant être fixé dans le premier élément de machine (1), caractérisée en ce que le premier élément de machine (1) comporte, dans une zone de ses dispositifs de positionnement et dans la direction de mouvement (5) de l'étrier (4), au moins deux parties d'arrêt (1.1, 1.2) situées l'une après l'autre, en ce que les parties d'arrêt (1.1, 1.2) sont disposées, dans la direction de mouvement (5), en avant et en arrière de l'évidement (3) prévu pour le second élément de machine (2), en ce que l'étrier (4) est pourvu, au moins à son extrémité avant, d'un dispositif de blocage qui peut être amené en prise avec les parties d'arrêt (1.1, 1.2) du premier élément de machine (1) et en ce que l'étrier (4) peut être amené en prise, dans l'état rétracté, avec la première partie d'arrêt (1.1) et disposé à l'extérieur de l'évidement (3).

2. Fixation enfichable selon la revendication 1, caractérisée en ce qu'au moins un des dispositifs de positionnement est agencé en forme de rainure.

3. Fixation enfichable selon une des revendications 1 à 2, caractérisée en ce que les extrémités avant, en considérant la direction de mouvement (5), de l'étrier (4) sont agencées en forme de crochets et en ce que les parties d'arrêt (1.1, 1.2) sont agencées comme des évidements.

4. Fixation enfichable selon une des revendications 1 à 2, caractérisée en ce que l'étrier (4) comporte des évidements et en ce que les évidements peuvent être amenés en prise avec des parties d'arrêt en forme de crochets du premier élément de machine (1).

5. Fixation enfichable selon les revendications 1 à 4, caractérisée en ce que l'étrier (4) comporte, dans la direction de mouvement (5) et à ses extrémités avant, au moins respectivement un évidement de démontage (6).

6. Fixation enfichable selon les revendications 1 à 5, caractérisée en ce que l'étrier (4) est pourvu d'un profil ondulé dans la direction de mouvement (5).

7. Fixation enfichable selon les revendications 1 à 6, caractérisée en ce que l'étrier (4) comporte, entre ses surfaces opposées (4.1, 4.2), un espacement augmentant de façon continue dans la direction de mouvement (5).

8. Fixation enfichable selon les revendications 1 à 7, caractérisée en ce que l'étrier (4) est constitué d'un matériau polymère.
